# EUROPEAN PATENT SPECIFICATION

(11) **EP 3 228 377 B1**
(45) Date of publication and mention of the grant of the patent: **12.02.2020**
(21) Application number: 15865310.5
(22) Date of filing: 28.12.2015
(51) Int. Cl.: B01D 53/18, B01D 53/02, B01D 53/58

(54) **DETOXIFICATION DEVICE FOR TOXIC GAS**
ENTGIFTUNGSVORRICHTUNG FÜR GIFTIGES GAS
DISPOSITIF D'ÉLIMINATION DE GAZ TOXIQUES

(30) Priority: 02.12.2014 CN 201410721261
(43) Date of publication of application: 11.10.2017
(73) Proprietor: Beijing Institute of Spacecraft System Engineering, Beijing 100094 (CN); Miao, Jianyin, Beijing 100094 (CN); Mi, Min, Beijing 100094 (CN); Sun, Funan, Beijing 100094 (CN); Lv, Wei, Beijing 100094 (CN); Zhang, Hongxing, Beijing 100094 (CN)
(72) Inventor: MIAO, Jianyin, Beijing 100094 (CN); MI, Min, Beijing 100094 (CN); SUN, Funan, Beijing 100094 (CN); LV, Wei, Beijing 100094 (CN); ZHANG, Hongxing, Beijing 100094 (CN)
(74) Representative: Vidon Brevets & Stratégie
(86) International application number: PCT/CN2015/000835
(87) International publication number: WO 2016/086505

(56) References cited:
- WO-A1-03/022407
- CN-A- 101 239 272
- CN-A- 102 002 408
- CN-A- 102 614 774
- CN-A- 104 548 882
- JP-A- 2003 251 134

## Description

### FIELD OF THE INVENTION

The present invention relates to a detoxification device, and in particular to a detoxification device for absorbing ammonia gas.

### BACKGROUND OF THE INVENTION

As a colorless gas that emits strong and irritating odor, ammonia is corrosive and irritating to skin tissues with which it comes into contact, and can absorb water in skin tissues, leading to degenerated tissue proteins and saponification of tissue fat and also destroying the structure of cell membranes. In some experiment that is conducted in a ground mode, ammonia gas needs to be fed into experimental instruments in the form of a working medium. To meet the requirements for detoxification during normal tail gas emission of ammonia gas acting as a working medium as well as during its emergency emission under special conditions, and to avoid damages caused by the ammonia gas to human body and surrounding environments, there is a need for a detoxification device for absorbing ammonia tail gas.

CN 102 614 774 discloses an ammonia absorption apparatus with a sump, and an absorbent circulating system with a pump, a pipe and a nozzle to circulate the liquid from the sump to the tower top. Gas inlets are connected to the connecting part of sump and tower, the tower top is connected to an adsorber via a ball valve, pipe and a gas monitor, the adsorber is filled with activated carbon which is suitable as ammonia adsorbent.

### SUMMARY OF THE INVENTION

It is an object of the present invention to provide a dry-detoxification device for toxic gas to ensure safety in use.

The technical solution of the present invention is as follows: the dry-detoxification device for toxic gas comprises an absorption tower, an ammonia adsorber and an absorption circulating system.

The absorption tower comprises: a sump and a tower column communicated with the top thereof. The sump is provided with an ammonia gas inlet, a nitrogen gas inlet and an emergency inlet, wherein lines of the ammonia gas inlet and the nitrogen gas inlet lead to a position where the sump and the tower column are connected with each other, and a pipeline of the emergency inlet leads to the bottom of the sump. A liquid discharging port and a circulating system joint are arranged on the bottom of the sump, and a stainless wire filter is arranged at the circulating system joint. The sump is filled with ammonia gas absorption liquid, and a polypropylene plastic ring is arranged on the inner wall of the tower column. A pressure gauge is arranged on the top of the tower column.

The absorption circulating system comprises: a circulating pump and a circulating liquid nozzle. The circulating pump is communicated with the circulating system joint via a pipeline, the ammonia gas absorption liquid inside the sump is conveyed to the circulating liquid nozzle, and the circulating liquid nozzle is mounted on the top of the tower column and sprays the ammonia gas absorption liquid downwards into the tower column.

The ammonia adsorber is communicated with the tower column, and an emergency exhaust port and an intercommunicating valve are arranged on the communication pipeline. An ammonia adsorbent is present inside the ammonia adsorber. An outlet end of the ammonia adsorber discharges safe gas via the pipeline.

The process of use of this device is as follows:
1) a set amount of nitrogen gas is introduced after ammonia gas to be discharged is passed through the absorption tower;
2) the circulating pump is opened, which drives the ammonia gas absorption liquid to pass through the circulating liquid nozzle to be further sprayed onto the ammonia gas in a downward direction, the reaction of the ammonia gas absorption liquid with the ammonia gas continues until a pressure-indicating value tends towards stability, followed by closing the circulating pump; if the pressure in the pressure gauge exceeds a threshold value during this process, then the emergency exhaust port is opened and the operation is terminated;
3) a set amount of nitrogen gas is introduced for the second time and the intercommunicating valve is opened, so that a trace amount of ammonia gas is pushed by the ammonia gas into the ammonia adsorber for reaction and then discharged via a pipeline, so as to complete a detoxification process;
4) upon completion of the detoxification process, a set amount of nitrogen gas is introduced for the third time, after which the valves are closed in reverse order from the outlet to inlet of the detoxification device, and depending on the effect of detoxification, a determination is made as to whether the absorption liquid is replaced;
5) in case of emergency, i.e. a large amount of ammonia gas needs to be detoxified, the ammonia gas is directly introduced to the bottom of the sump via the pipeline of the emergency inlet, and is then discharged through the emergency exhaust port; and under this circumstance, it is required to replace the absorption liquid after detoxification is completed.

The following advantageous effects are brought:
(1) the two-stage detoxification mode is employed for combined detoxification in the present invention. The merits of these two different approaches are put in use in an effective way, while at the same time realizing both large absorbent capacity and high absorption depth.
(2) At the primary stage, detoxification is accomplished by spraying of the absorption liquid, use of the absorption tower brings an excellent absorption effect, and due to the fact that forced circulation is offered by the circulating pump, both the liquid level of the absorption tower and the operational procedures are reduced. The ammonia adsorbent is utilized for detoxification at the secondary stage, and with this solid adsorbent, it is ensured that ammonia concentration in tail gas is lowered to a value of trace amounts, which satisfies the requirements for environmental protection.
(3) In an effort to improve the practicability of the present invention, two approaches, i.e. emergency detoxification and conventional detoxification, are devised for detoxification.

Emergency detoxification: with the absorption liquid being adopted for realizing soaking detoxification, this approach can gain its adaptability to sufficient detoxification for high-flow gas.

Conventional detoxification: by utilizing intermittent-type detoxification, nitrogen-assisted propulsion, and detoxification by countercurrent spraying, the effect of detoxification is enhanced and the absorption liquid is prevented from being sucked back and flowing backwards.

### BRIEF DESCRIPTION OF THE FIGURES

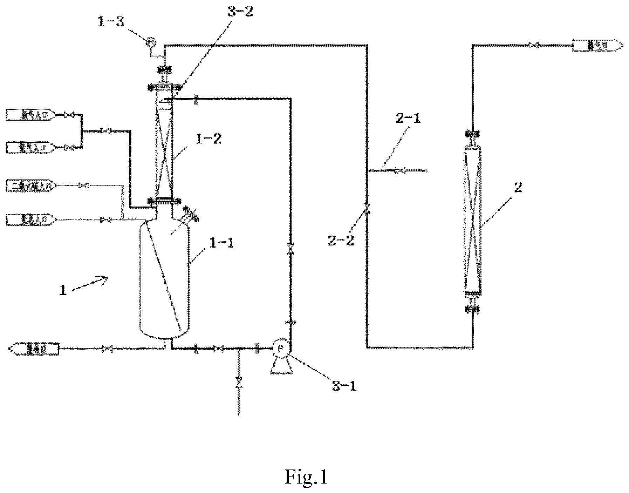

Fig. 1 is a structural schematic diagram of the present invention;
wherein 1-absorption tower, 1-1-sump, 1-2-tower column, 1-3-pressure gauge, 2-ammonia adsorber, 2-1-emergency exhaust port, 2-2-intercommunicating valve, 3-absorption circulating system, 3-1-circulating pump, and 3-2-circulating liquid nozzle.

### DETAILED DESCRIPTION

Referring to Fig. 1, shown is a dry-detoxification device for toxic gas, which comprises an absorption tower 1, an ammonia adsorber 2 and an absorption circulating system 3.

The absorption tower 1 comprises: a sump 1-1 and a tower column 1-2 communicated with the top thereof. The sump 1-1 is provided with an ammonia gas inlet, a nitrogen gas inlet and an emergency inlet, wherein lines of the ammonia gas inlet and the nitrogen gas inlet lead to a position where the sump 1-1 and the tower column 1-2 are connected with each other, and a pipeline of the emergency inlet leads to the bottom of the sump 1-1. A liquid discharging port and a circulating system joint are arranged on the bottom of the sump 1-1, and a stainless wire filter is arranged at the circulating system joint. The sump 1-1 is filled with ammonia gas absorption liquid, and a polypropylene plastic ring is arranged on the inner wall of the tower column 1-2. A pressure gauge 1-3 is arranged on the top of the tower column 1-2.

The absorption circulating system 3 comprises: a circulating pump 3-1 and a circulating liquid nozzle 3-2. The circulating pump 3-1 is communicated with the circulating system joint via a pipeline, the ammonia gas absorption liquid inside the sump 1-1 is conveyed to the circulating liquid nozzle 3-2, and the circulating liquid nozzle 3-2 is mounted on the top of the tower column 1-2 and sprays the ammonia gas absorption liquid downwards into the tower column 1-2.

The ammonia adsorber 2 is communicated with the top of the tower column 1-2, and an emergency exhaust port 2-1 and an intercommunicating valve 2-2 are arranged on the communication pipeline. An ammonia adsorbent is present inside the ammonia adsorber 2. Porous activated alumina is used as the monomer in the ammonia adsorbent. A solid ammonia adsorbent with acidity is formed by impregnating composite acids. Safe gas is discharged via a pipeline from the outlet end of the ammonia adsorber 2.

The process of use of this device is as follows.
1. To prevent the absorption liquid from being sucked back, a set amount of nitrogen gas needs to be introduced for protection purposes after ammonia gas to be discharged is passed through the absorption tower 1.
2. The circulating pump 3-1 is opened, which drives the ammonia gas absorption liquid to pass through the circulating liquid nozzle 3-2 to be further sprayed onto the ammonia gas in a downward direction, the reaction of the ammonia gas absorption liquid with the ammonia gas continues until a pressure-indicating value from the pressure gauge 1-3 tends towards stability (which suggests that the reaction is complete), followed by closing the circulating pump; if, during this process, the pressure indicated by the pressure gauge 1-3 is so high as to exceed a threshold value , then the emergency exhaust port 2-1 is opened and the operation is terminated. Ammonia falls under the category of weakly basic gases and has the physical property of being highly dissolved in water, so on the basis of the physical and chemical characteristics of ammonia gas, the vast majority of the ammonia gas in tail gas is dissolved in an acidic aqueous solution, and stable compounds of salts are produced by acid-base neutralization reaction.
3. A set amount of nitrogen gas is introduced for the second time and the intercommunicating valve 2-2 is opened, so that a trace amount of ammonia gas is pushed by the ammonia gas into the ammonia adsorber 2 for reaction and then discharged via a pipeline, so as to complete a detoxification process. Porous activated alumina is used as the monomer in the ammonia adsorbent, and a solid ammonia adsorbent with acidity is formed by impregnating composite acids like citric acid. The acidic substance impregnated in the solid ammonia adsorbent can undergo acid-base neutralization reaction with ammonia, producing stable compounds of salts.
4. After detoxification is concluded, to prevent the absorption liquid from being sucked back, a set amount of nitrogen gas is introduced for the third time, after which the valves are closed in reverse order from the outlet to inlet of the detoxification device, and depending on the effect of detoxification, a determination is made as to whether the absorption liquid is replaced.
5. In case of emergency, i.e. a large amount of ammonia gas needs to be detoxified, the ammonia gas is directly introduced to the bottom of the sump 1-1 via the pipeline of the emergency inlet, and is then discharged through the emergency exhaust port 2-1; and under this circumstance, it is required to replace the absorption liquid after detoxification is completed.

Preferably, in order to avoid a decrease in the concentration of acidic solution, a carbon dioxide inlet leading to the bottom of the sump 1-1 is further arranged on the sump 1-1, and thus the purpose of increasing acidity is achieved by introducing carbon dioxide into the absorption liquid.

## Claims

1. Use of a dry-detoxification device for toxic gas, the device comprises an absorption tower (1), an ammonia adsorber (2), and an absorption circulating system (3);
the absorption circulating system (3) comprises: a circulating pump (3-1) and a circulating liquid nozzle (3-2); the circulating pump (3-1) is communicated with the circulating system joint via a pipeline, the ammonia gas absorption liquid inside the sump (1-1) is conveyed to the circulating liquid nozzle (3-2), and the circulating liquid nozzle (3-2) is mounted on the top of the tower column (1-2) and sprays the ammonia gas absorption liquid downwards into the tower column (1-2)**characterized in that** :the absorption tower (1) comprises: a sump (1-1) and a tower column (1-2) communicated with the top thereof; the sump (1-1) is provided with an ammonia gas inlet, a nitrogen gas inlet and an emergency inlet, wherein lines of the ammonia gas inlet and the nitrogen gas inlet lead to a position where the sump (1-1) and the tower column (1-2) are connected with each other, and a pipeline of the emergency inlet leads to the bottom of the sump (1-1); a liquid discharging port and a circulating system joint are arranged on the bottom of the sump (1-1), and a stainless wire filter is arranged at the circulating system joint; the sump (1-1) is filled with ammonia gas absorption liquid, and a polypropylene plastic ring is arranged on the inner wall of the tower column (1-2); a pressure gauge (1-3) is arranged on the top of the tower column (1-2); the ammonia adsorber (2) is communicated with the top of the tower column (1-2), and an emergency exhaust port (2-1) and an intercommunicating valve (2-2) are arranged on the communication pipeline; an ammonia adsorbent is present inside the ammonia adsorber (2), and an outlet end of the ammonia adsorber (2) discharges safe gas via the pipeline;
the process of use of this device is as follows:
1) a set amount of nitrogen gas is introduced after ammonia gas to be discharged is passed through the absorption tower (1);
2) the circulating pump (3-1) is opened, which drives the ammonia gas absorption liquid to pass through the circulating liquid nozzle (3-2) to be further sprayed onto the ammonia gas in a downward direction, the reaction of the ammonia gas absorption liquid with the ammonia gas continues until a pressure-indicating value from the pressure gauge (1-3) tends towards stability, followed by closing the circulating pump; if the pressure indicated by the pressure gauge (1-3) exceeds a threshold value during this process, then the emergency exhaust port (2-1) is opened and the operation is terminated;
3) a set amount of nitrogen gas is introduced for the second time and the intercommunicating valve (2-2) is opened, so that a trace amount of ammonia gas is pushed by the nitrogen gas into the ammonia adsorber (2) for reaction and then discharged via a pipeline, so as to complete a detoxification process;
4) upon completion of the detoxification process, a set amount of nitrogen gas is introduced for the third time, after which the valves are closed in reverse order from the outlet to inlet of the detoxification device, and depending on the effect of detoxification, a determination is made as to whether the absorption liquid is replaced;
5) in case of emergency, i.e. a large amount of ammonia gas needs to be detoxified, the ammonia gas is directly introduced to the bottom of the sump (1-1) via the pipeline of the emergency inlet, and is then discharged through the emergency exhaust port (2-1); and under this circumstance, it is required to replace the absorption liquid after detoxification is completed.

2. Use of the dry-detoxification device for toxic gas according to claim 1, the device further **characterized in that** a carbon dioxide inlet leading to the bottom of the sump (1-1) is further arranged on the sump (1-1).

3. Use of the dry-detoxification device for toxic gas according to claim 1 or 2, **characterized in that** Ammonia adsorbent is acidic solid ammonia adsorbent formed by porous activated alumina impregnated with compound acid.

## Patentansprüche

1. Verwendung einer Trockenentgiftungsvorrichtung für toxische Gase, wobei die Vorrichtung einen Absorptionsturm (1), einen Ammoniakabsorber (2) und ein Absorptionszirkulationssystem (3) umfasst;
wobei das Absorptionszirkulationssystem (3) umfasst: eine Zirkulationspumpe (3-1) und eine Zirkulationsflüssigkeitsdüse (3-2); die Zirkulationspumpe (3-1) mit der Zirkulationssystemverbindung über eine Rohrleitung in Verbindung steht, die Ammoniakgasabsorptionsflüssigkeit in dem Sumpf (1-1) zu der Zirkulationsflüssigkeitsdüse (3-2) gefördert wird und die Zirkulationsflüssigkeitsdüse (3-2) auf der Oberseite der Turmsäule (1-2) angebracht ist und die Ammoniakgasabsorptionsflüssigkeit nach unten in die Turmsäule (1-2) sprüht, **dadurch gekennzeichnet, dass**: der Absorptionsturm (1) umfasst: einen Sumpf (1-1) und eine Turmsäule (1-2), die mit der Oberseite davon in Verbindung steht; der Sumpf (1-1) mit einem Ammoniakgaseinlass, einem Stickstoffgaseinlass und einem Noteinlass bereitgestellt ist, wobei Leitungen des Ammoniakgaseinlasses und des Stickstoffgaseinlasses zu einer Position führen, in der der Sumpf (1-1) und die Turmsäule (1-2) miteinander verbunden sind und eine Rohrleitung des Noteinlasses zur Unterseite des Sumpfes (1-1) führt; eine Flüssigkeitsauslassöffnung und eine Zirkulationssystemverbindung auf der Unterseite des Sumpfes (1-1) bereitgestellt sind, und ein Edelstahldrahtfilter an der Zirkulationssystemverbindung bereitgestellt ist; der Sumpf (1-1) mit einer Ammoniakgasabsorptionsflüssigkeit gefüllt ist und ein Polypropylenkunststoffring an der inneren Wand der Turmsäule (1-2) bereitgestellt ist; ein Druckmessgerät (1-3) an der Oberseite der Turmsäule (1-2) bereitgestellt ist;
der Ammoniakabsorber (2) mit der Oberseite der Turmsäule (1-2) in Verbindung steht und eine Notablassöffnung (2-1) und ein Zwischenverbindungsventil (2-2) an der Verbindungsrohrleitung bereitgestellt sind; ein Ammoniakabsorptionsmittel im Ammoniakabsorber (2) vorhanden ist und ein Auslassende des Ammoniakabsorbers (2) sicheres Gas über die Rohrleitung auslässt;
wobei das Verfahren der Verwendung dieser Vorrichtung folgendermaßen ist:
1) eine festgelegte Menge Stickstoffgas wird, nachdem auszulassendes Ammoniakgas den Absorptionsturm (1) passiert hat, eingeleitet;
2) die Zirkulationspumpe (3-1) wird geöffnet, wodurch die Ammoniakgasabsorptionsflüssigkeit getrieben wird, die Zirkulationsflüssigkeitsdüse (3-2) zu passieren, um ferner auf das Ammoniakgas in einer Abwärtsrichtung gesprüht zu werden, wobei die Reaktion der Ammoniakgasabsorptionsflüssigkeit mit dem Ammoniakgas sich fortsetzt, bis ein Druckanzeigewert des Druckmessgeräts (1-3) zur Stabilität neigt, gefolgt durch Schließen der Zirkulationspumpe; wenn der Druck, der durch das Druckmessgerät (1-3) angezeigt wird, einen Schwellenwert während dieses Verfahrens überschreitet, die Notablassöffnung (2-1) geöffnet wird und der Vorgang abgebrochen wird;
3) eine festgelegte Menge Stickstoffgas wird für das zweite Mal eingeleitet und das Zwischenverbindungsventil (2-2) wird geöffnet, so dass eine gewisse Menge Ammoniakgas durch das Stickstoffgas in den Ammoniakabsorber (2) zur Reaktion gedrückt und dann über die Rohrleitung ausgelassen wird, um so ein Entgiftungsverfahren abzuschließen;
4) nach Abschluss des Entgiftungsverfahrens wird eine festgelegte Menge Stickstoffgas für das dritte Mal eingeleitet, nachdem die Ventile in umgekehrter Reihenfolge vom Auslass zum Einlass der Entgiftungsvorrichtung geschlossen werden und in Abhängigkeit der Wirkung eine Bestimmung durchgeführt wird, ob die Absorptionsflüssigkeit ersetzt wird;
5) im Notfall, das heißt, wenn eine große Menge von Ammoniakgas entgiftet werden muss, wird das Ammoniakgas direkt in die Unterseite des Sumpfes (1-1) über die Rohrleitung des Noteinlasses eingeführt und dann durch die Notablassöffnung (2-1) abgelassen; und unter diesen Umständen ist es nötig, die Absorptionsflüssigkeit nachdem die Entgiftung abgeschlossen ist, zu ersetzen.

2. Verwendung einer Trockenentgiftungsvorrichtung für toxische Gase nach Anspruch 1, wobei die Vorrichtung ferner **dadurch gekennzeichnet ist, dass** ein Kohlendioxideinlass, der zur Unterseite des Sumpfes (1-1) führt, ferner am Sumpf (1-1) bereitgestellt ist.

3. Verwendung einer Trockenentgiftungsvorrichtung für toxische Gase nach Anspruch 1 oder 2, **dadurch gekennzeichnet, dass** das Ammoniakabsorptionsmittel ein saures, festes Ammoniakabsorptionsmittel ist, das durch poröses, aktives Aluminiumoxid imprägniert mit Verbundsäure gebildet ist.

## Revendications

1. Utilisation d'un dispositif d'élimination à sec de gaz toxiques, le dispositif comprenant une tour d'absorption (1), un adsorbeur d'ammoniac (2) et un système de circulation à absorption (3) ;
le système de circulation à absorption (3) comprend : une pompe de circulation (3-1) et une buse de liquide de circulation (3-2) ; la pompe de circulation (3-1) est en communication avec le raccord de système de circulation via une conduite, le liquide d'absorption de gaz d'ammoniac à l'intérieur du carter (1-1) est acheminé jusqu'à la buse de liquide de circulation (3-2), et la buse de liquide de circulation (3-2) est montée sur le sommet de la colonne de tour (1-2) et pulvérise le liquide d'absorption de gaz d'ammoniac vers le bas dans la colonne de tour (1-2), **caractérisée en ce que** : la tour d'absorption (1) comprend : un carter (1-1) et une colonne de tour (1-2) communiquant avec le sommet de celui-ci ; le carter (1-1) est pourvu d'une entrée de gaz d'ammoniac, d'une entrée de gaz d'azote et d'une entrée d'urgence, dans laquelle des lignes de l'entrée de gaz d'ammoniac et de l'entrée de gaz d'azote mènent à une position où le carter (1-1) et la colonne de tour (1-2) sont reliés l'un à l'autre, et une conduite de l'entrée d'urgence mène au fond du carter (1-1) ; un orifice de décharge de liquide et un raccord de système de circulation sont agencés sur le fond du carter (1-1), et un filtre à fil inoxydable est agencé au niveau du raccord de système de circulation ; le carter (1-1) est rempli de liquide d'absorption de gaz d'ammoniac, et une bague en plastique de polypropylène est agencée sur la paroi intérieure de la colonne de tour (1-2) ; une jauge de pression (1-3) est agencée sur le sommet de la colonne de tour (1-2) ; l'adsorbeur d'ammoniac (2) communique avec le sommet de la colonne de tour (1-2), et un orifice d'échappement d'urgence (2-1) et une soupape d'intercommunication (2-2) sont agencés sur la conduite de communication ; un adsorbant d'ammoniac est présent à l'intérieur de l'adsorbeur d'ammoniac (2), et une extrémité de sortie de l'adsorbeur d'ammoniac (2) décharge du gaz sans danger via la conduite ;
le processus d'utilisation de ce dispositif est le suivant :
1) une quantité définie de gaz d'azote est introduite après que le gaz d'ammoniac à décharger a traversé la tour d'absorption (1) ;
2) la pompe de circulation (3-1) est ouverte, ce qui amène le liquide d'absorption de gaz d'ammoniac à traverser la buse de liquide de circulation (3-2) pour être encore pulvérisé sur le gaz d'ammoniac dans une direction descendante, la réaction du liquide d'absorption de gaz d'ammoniac avec le gaz d'ammoniac se poursuit jusqu'à ce qu'une valeur d'indication de pression provenant de la jauge de pression (1-3) tende vers une stabilité, suivie par la fermeture de la pompe de circulation ; si la pression indiquée par la jauge de pression (1-3) dépasse une valeur seuil durant ce processus, alors l'orifice d'échappement d'urgence (2-1) est ouvert et l'opération est terminée ;
3) une quantité définie de gaz d'azote est introduite pour la deuxième fois et la soupape d'intercommunication (2-2) est ouverte, de telle sorte qu'une quantité minime de gaz d'ammoniac est poussée par le gaz d'azote dans l'adsorbeur d'ammoniac (2) pour réaction puis déchargée via une conduite, de manière à achever un processus d'élimination ;
4) à la fin du processus d'élimination, une quantité définie de gaz d'azote est introduite pour la troisième fois, après quoi les soupapes sont fermées dans l'ordre inverse de la sortie vers l'entrée du dispositif d'élimination, et en fonction de l'effet d'élimination, on détermine s'il faut que le liquide d'absorption soit remplacé ;
5) en cas d'urgence, c'est-à-dire qu'une grande quantité de gaz d'ammoniac a besoin d'être éliminée, le gaz d'ammoniac est directement introduit dans le fond du carter (1-1) via la conduite de l'entrée d'urgence, puis est déchargé à travers l'orifice d'échappement d'urgence (2-1) ; et dans cette circonstance, il est nécessaire de remplacer le liquide d'absorption après que l'élimination s'est achevée.

2. Utilisation du dispositif d'élimination à sec de gaz toxiques selon la revendication 1, le dispositif étant en outre **caractérisé en ce qu'**une entrée de dioxyde de carbone menant au fond du carter (1-1) est en outre agencée sur le carter (1-1).

3. Utilisation du dispositif d'élimination à sec de gaz toxiques selon la revendication 1 ou 2, **caractérisé en ce que** l'adsorbant d'ammoniac est un adsorbant d'ammoniac solide acide formé par de l'alumine activée poreuse imprégnée d'acide composé.
